# EUROPEAN PATENT SPECIFICATION

(11) **EP 0 578 647 B1**
(45) Date of publication and mention of the grant of the patent: **28.05.1997**
(21) Application number: 92905068.0
(22) Date of filing: 19.02.1992
(51) Int. Cl.: G01B 3/10

(54) **Method and apparatus for treatment of ground, crop or the like dependent on distance travelled**
Verfahren und Gerät zur Behandlung von Boden, Ernte o.dgl. abhängig von durchfahrener Strecke
Procédé et appareil pour traitement de sol, récolte ou pareil dépendant de distance parcourue

(30) Priority: 21.02.1991 GB 9103673
(43) Date of publication of application: 19.01.1994
(73) Proprietor: Benest Engineering Limited, Jersey, Channel Islands (GB)
(72) Inventor: Benest Engineering Limited, Jersey, Channel Islands (GB)
(74) Representative: Archer, Philip Bruce
(86) International application number: GB9200293
(87) International publication number: WO9214985

(56) References cited:
- WO-A-87/03675
- GB-A- 2 003 296
- GB-A- 2 154 000
- US-A- 2 516 143
- US-A- 4 149 320

## Description

This invention relates to a method and apparatus for treatment either of ground or crop, or otherwise dependent on the distance travelled of treatment apparatus. The invention is particularly applicable to such measurement of distances and related quantities in an on-the-go fashion, as is required for processes such as ground or crop spraying, or other processes in which the extent of treatment depends on the distance travelled.

Prior methods and apparatus suffer from various shortcomings including the inaccuracy of beam-based distance measuring systems, their limited range, and their inapplicability to outdoor situations where there may not be a suitable vertical surface for reflective purposes.

Likewise, wheel-based distance measuring systems are subject to inaccuracy due to wheel slip, inconvenience of use, and related factors.

So far as on-the-go distance measurement is concerned, recent developments include electro mechanical techniques utilising ultrasonics, infra-red, laser and radar systems. The most common system actually in use involves counting the revolutions of a tractor wheel, the outer circumference of the wheel being of known length. However, while this method is relatively straightforward to implement, its accuracy is relatively low due to the nature of the ground traversed by the wheel, the variability of the state of wear of the tyre, and the tyre's degree of inflation, and indeed the effect of weather on the ground surface. In relation to agricultural and horticultural spraying operations, there is a need for measurement of ground speed with an accuracy of plus or minus one per cent. Field tests have shown that distance/speed measurement based on the tractor wheel provide an accuracy only of about plus or minus five per cent. Thus, this conventional technique while being readily implemented, is far too inaccurate, as indeed are the above-mentioned beam - based techniques. These beam techniques appear to be unduly susceptible to variations in the surface from which the beam is reflected (for example the ground), and other unknowns, such as the influence of atmospheric variations and growing crop material.

There is disclosed in WO-A-87/03675 (Haglof) a thread metre which is entirely concerned with distance measuring, particularly for use in relation to cars, snow scooters etc at speeds up to 40 kilometres per hour. The device provides improved guides for the thread for use in relatively long distance and high speed length measurement operations.

There is disclosed in GB - A - 2 003 296 (Mezog Azdasagi) mobile apparatus for discharging a liquid at a given specific liquid output rate. In the specification it is stated that it would be desirable to regulate the specific liquid output rate by measuring the distance covered and controlling the discharge rate and the speed of the vehicle. In an embodiment, an odometer wheel is used in association with a free wheel of the apparatus. Signals from the odometer are fed to a central control unit which determines the specific liquid output rate. To the extent that this prior disclosure employs a free wheel of the apparatus running on the ground, with an odometer wheel running on it, the disclosure ignores the effect of such variables as the state of inflation of the free wheel tyre, its state of wear, whether it is wet or dry, the presence of earth or other matter on it, the effect of the varying weight of the sprayer's liquid on it as spraying proceeds, and slippage of the wheel (even though undriven) relative to the ground in certain conditions.

Accordingly, there is a considerable need for improvements in the technique of treatment of ground or crop or otherwise by treatment apparatus, with respect to the accuracy of control of such apparatus in relation to speed and/or distance travelled of such apparatus.

According to the invention there is provided a method and apparatus for treatment of ground or crop or otherwise, as defined in the accompanying claims.

In an embodiment, such a method and apparatus provides a line to be dispensed, and one end of the line is affixed at a reference location. The line is dispensed as the other end of the line is moved away from the reference location. In general, the method and apparatus involves affixing the free end of the line, and moving the remainder of the line away from the free end while dispensing proceeds, but in certain applications, it would be possible to adopt the inverse arrangement.

As dispensing proceeds, the step is taken of detecting information relating to the length of line dispensed. From this data, the distance travelled can be calculated. By detecting this information actually during the dispensing operation, the method provides instantaneously available data relating to distance and/or speed which can be used, for example, to control a process requiring this data. The data is available without the necessity to stop and examine a fixed measuring tape. Indeed, the data is available equally as instantaneously as in the case where the data is based upon tractor-wheel-turn measurement systems, but without the inherent inaccuracy due to wheel slip and the other variables mentioned above.

In the embodiment, once the necessary information relating to distance and/or speed has been obtained, the length of line dispensed can be discarded. In other words, there is no necessity to re-wind the line as is the case with previously known tape measure techniques. By adopting the use of a line which enables distance and/or speed measurement to be carried out without the need for visually recognisable distance markings on a tape in the manner of the prior art, and by using a relatively very inexpensive material, one of the main inconveniences of such previously proposed distance measurement techniques is immediately overcome. Of course, in some circumstances it might not be necessary actually to discard the dispensed line after a given measurement step, particularly if it was desired to recommence another such measurement step immediately, or if the apparatus were then going to be stationary. However, it is obviously more convenient to the user if some means of discarding the line can be conveniently activated at the end of a given measurement procedure.

Also in the embodiment, the detection step involves the detection of spaced indicators on the line dispensed. Such indicators need not necessarily be visible. The distance and/or speed information obtained may be displayed visually or fed to a mechanism to be controlled. Where speed data is required, detection of the rate of dispensing of the line is carried out so as to provide a direct measure of speed. Where area information is required, two successive distance measurements are made along successive sides of an area to be measured, and calculating apparatus is caused to determine the product of these measurements.

Turning now to more specific aspects of the invention, the line dispensed itself may be a filament or thread, for example of biodegradable cotton, or of a biodegradable synthetic material. By the use of the term "discardable" in relation to the line dispensed, the intention is to convey the meaning that the line is intended to be discarded by the user after taking a distance measurement, thus relieving the user of the necessity to rewind the line. Obviously, any prior art line could be cut-off, but in most cases this would entirely eliminate the possibility of re-using the apparatus for a subsequent distance measurement. It will be understood that the discardability of a line will be affected to some extent by its original cost, and this will likewise be affected by the intended use of the method and apparatus. Thus, in a high cost application, a significantly more expensive line may be acceptable for discarding, than elsewhere. Clearly, in principle, an inexpensive line is to be preferred, and this should also be lightweight per unit length, and may, for example, be provided in the form of a cassette containing the line, or a reel.

To assist with distance measurements, the line may be provided with indicating means at regular intervals, for example a metallic material compound could be incorporated in the line at such intervals, for detection by a sensing device, such as a magnetic switch. Alternatively, the external or internal structure of the line may be such that its movement is detectable either optically, or by the use of a beam, or otherwise, using sensors past which, or between which, the line has to move as it is dispensed. An alternative purely mechanical arrangement would be the provision of a low inertia sensing wheel or capstand contacting the line as it is dispensed, the rotation of which can be sensed and monitored.

The line can be arranged in the form of a spool or bobbin, or indeed as a pack or stack. It may be convenient to provide the line in the form of a readily insertable cassette containing a known quantity of line arranged in a well defined manner, protected from external mechanical interference, from which the line can be reliably dispensed, and from which a short projecting length of line could be arranged to be automatically engaged and brought into operative connection to a mechanism for affixing the free end of same on commencement of a measurement operation.

In a preferred embodiment, a variety of means may be adopted for affixing the end of the line at the commencement of a measurement operation. For example, the line may be attached to a weight or to a spike or like means forced into the ground. In some situations, adhesive means could be adopted. For convenience of frequent operation in agricultural and horticultural operations it is envisaged that an automatically primed mechanism be provided, on the tractor, or on the associated implement, whereby the free end of the measurement line is automatically engaged with the article to which- it is to be affixed and held at a location on the ground. Then, when the operator so desires, a mere activation of the mechanism is sufficient to cause the end of the line and its associated anchoring means to be released and affixed at the desired location, after which dispensing proceeds and the associated measurement steps. On completion of these, automatic means cuts the line so as to discard same and the process is repeated, when required.

During dispensing, the dispensing movement of the line is detected, for example by means of the spaced markers on or in the line. Knowing the spacing of these, the distance travelled can be determined, and from associated time measurements, the speed of travel likewise readily calculated. Successive length measurements along two sides of an area enable the area thereof to be readily computed. If the area is non-rectangular, additional measurements and associated adjustment of the calculation procedure may be needed. The calculation system may provide for presentation of the information in more than one system of units, by simple operation of a calculation control system. The controls may also provide for selective zeroing of the distance and/or speed measurement at any chosen time. Likewise, the measurement information obtained may be displayed on the measurement apparatus itself, or elsewhere, or in some circumstances not at all. In this latter regard, it will be understood that the distance/speed measurements may be needed only by a control mechanism, for example associated with a sprayer, to enable appropriate dosage thereby, and the operator may not necessarily need this information at all. Electronic control systems for detection, computation and display of the data concerned are readily available. Those skilled in the art will require no further instruction in their use for the purposes of the present invention.

Where the invention is intended for use on a vehicle, the location at which the apparatus is mounted is a matter of free choice for the operator/designer. In agricultural/ horticultural operations it is likely that the equipment will be mounted on the implement concerned, such as a sprayer, but may equally well be provided on the tractor if required for use with one than one implement. It is envisaged that for certain applications rewind may be desirable, simply to avoid the inconvenience of separately disposing of a discarded length of line. The term "discardable" is to be construed accordingly. A simple measuring device of this kind represents a significant advance in terms of ease of use, instantaneous read out and re-setting for distance measurements.

In the case of devices, such as those employed in agricultural operations, in which significant lengths of line will be dispensed in any one measuring operation, the calculation system may be provided with a facility for making allowance in the distance calculation for the likely stretch of the line as dispensing proceeds. Information relating to the stretch characteristics of the line would be required for this purpose.

An embodiment of the invention will now be described by way of example with reference to the accompanying drawings in which :-
Fig 1 shows, somewhat diagrammatically, a plan view of a tractor and associated boom-type sprayer having mounted at the rear thereof a distance measuring device according to the invention, the device being shown in-use; and
Fig 2 shows, again somewhat diagrammatically, a sectioned representation of the measuring device of Fig 1 in which a cassette providing a source of dispensable line has been inserted into a housing having sensing means connected to a calculating device and a display device.

As shown in the drawings, a tractor 10 has mounted on the three-point hitch 12 thereof a boom type sprayer 14 having foldable booms 16, 18 mounted on a central headstock 20. The normal forward travel direction of the tractor and sprayer is indicated by arrow F.

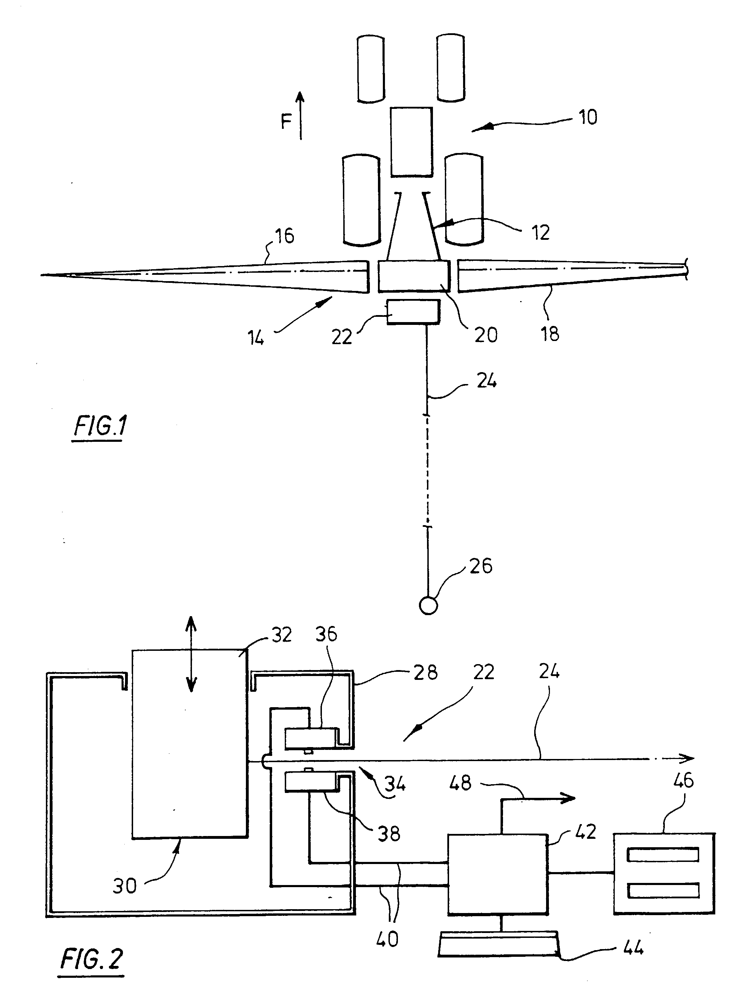

Mounted at the rear of headstock 20 is distance measuring apparatus 22. In Fig 1, apparatus 22 is shown, merely for clarity, disproportionately large. The apparatus is shown dispensing a line 24 affixed at a location 26 for measurement purposes.

Turning now to the details of apparatus 22 as shown in Fig 2, it will be seen that the apparatus comprises a housing 28 in which a supply 30 of line 24 is provided in the form of a cassette 32 containing the line, and from which the line 24 is payed-out through a dispensing opening 34 between two sensors 36, 38 connected by conductors 40 to a calculating module 42 controlled by a control panel 44 and having an associated read-out device 46.

In use, the driver of tractor 10 takes periodic distance and speed measurements using apparatus 22 from which a signal proceeds via conductors 48 to a control system (not shown) of sprayer 14. Measurements may be taken as often as required, particularly during the early stages of a spraying operation, and then at occasional intervals to verify that the variables are within pre-set limits.

To commence a measurement operation, the driver causes an automatic device (not shown) to affix the free end of line 24 at location 26. For example, this may be carried out by use of a vertically downwardly pointing mechanism which discharges a small pointed projectile attached to the line, into the ground. This anchors the end of the line and dispensing proceeds as the tractor and sprayer continue to move in direction F. Sensors 36, 38 detect the rate of dispensing and feed signals to module 42 controlled by panel 44, and a read out 46 of distance and/or speed is provided. Panel 44 includes means for zeroing the reading at any chosen time.

As soon as the necessary measurements have been taken, panel 44 can be caused to command that the line be discarded, thereby activating a line-cutting knife (not shown).

Subsequent measurements may be taken in the same way, merely upon actuating a single control.

The discarded line is sufficiently thin and therefore sufficiently unlikely to be visually noticeable that discarding it is environmentally acceptable. In any case, the line may be formed of a biodegradable material, whereby it disintegrates within a relatively short time period.

Interestingly, the above embodiment provides a technique for on-the-go speed and distance measurement in which the accuracy of tape-type measurement has been combined with the convenience of wheel revolution measurement systems, whereby the precise control of implements such as sprayers requiring a high degree of accuracy to achieve best results, is obtained. The convenience and speed of measurement makes the invention applicable also to domestic and other non-vehicular (ie static) applications.

## Claims

1. A method of treatment of ground or crop or a method otherwise dependent on the distance travelled of treatment apparatus (14), the method comprising measuring distance travelled by said treatment apparatus (14) and using said distance information to control said treatment apparatus,
characterised by
measuring said distance travelled by dispensing a discardable measuring line (24) from a reference location along a distance to be measured, the method further comprising detecting the rate of dispensing of said line at intervals during movement of said treatment apparatus so as to determine the speed of movement of said treatment apparatus, and using said speed information to control said treatment apparatus.

2. A method according to claim 1 characterised by said treatment comprising spraying.

3. A method according to claim 1 or claim 2 characterised by the step of employing sensors (36, 38) to detect said rate of dispensing of said line (24).

4. A method according to any one of claims 1 to 3 characterised by said step of using said speed information to control said treatment apparatus comprising providing a signal which proceeds via conductors (48) to a control system for said treatment apparatus.

5. A method according to any one of the preceding claims characterised by said step of detecting said rate of dispensing of said line comprising detecting spaced indicators on said line.

6. A method according to any one of the preceding claims characterised by said step of dispensing said discardable measuring line (24) comprising dispensing said line from a cassette (32) containing said line.

7. A method according to any one of the preceding claims characterised by said step of dispensing said discardable measuring line (24) from a reference location comprising affixing an end of said line by means of a downwardly-directed projectile.

8. A method according to any one of the preceding claims characterised by the step of activating line-cutting means to discard said line (24) after effecting said step of detecting said rate of dispensing.

9. Apparatus for treatment of ground or crop or treatment apparatus otherwise dependent on the distance travelled by said apparatus, the apparatus comprising distance measuring apparatus (22) and control means (42) for said treatment apparatus whereby said distance information obtained during travel of said apparatus (22) is effective, in use, to control said treatment apparatus,
characterised by
said distance measuring apparatus comprising apparatus adapted to dispense a discardable measuring line (24) dispensable from a reference location along a distance to be measured, and said distance measuring apparatus being adapted to detect the rate of dispensing of said line at intervals during movement of said treatment apparatus so as to determine the speed of movement of said treatment apparatus, whereby said control means may be employed to control said treatment apparatus.

10. Apparatus according to claim 3 in the form of a sprayer.

11. Apparatus according to claim 9 or claim 10 characterised by said distance measuring apparatus comprising sensors (36, 38) to detect said rate of dispensing of said line (24).

12. Apparatus according to any one of claims 9 to 11 characterised by said distance measuring apparatus being adapted to provide a signal, and said signal proceeding via conductors (48), in use, to said control means (42) for said treatment apparatus.

13. Apparatus according to any one of claims 9 to 12 characterised by said line (24) comprising spaced indicators adapted to be detected by said distance measuring apparatus (22).

14. Apparatus according to any one of claims 9 to 13 characterised by said discardable measuring line (24) being provided in a cassette (32) from which it is dispensed.

15. Apparatus according to any one of claims 9 to 13 characterised by a pointed projectile to be attached to said line (24) for downward projection to affix the free end of said line to enable same to be dispensed therefrom.

16. Apparatus according to any one of claims 9 to 14 characterised by cutting means adapted to cut said line (24) after said distance measuring apparatus has detected said rate of dispensing of said line, whereby said line is discarded.

## Patentansprüche

1. Verfahren zur Behandlung von Boden oder Getreide oder ein Verfahren anderwärtig abhängig von der zurückgelegten Entfernung einer Behandlungsvorrichtung (14), wobei das Verfahren umfaßt Messen der zurückgelegten Entfernung durch die Behandlungsvorrichtung (14) und Verwenden der Abstands- bzw. Entfernungsinformation zum Steuern der Behandlungsvorrichtung,
**dadurch gekennzeichnet**, daß das Messen der zurückgelegten Entfernung erfolgt durch Ausgeben einer wegwerfbaren Meßschnur (24) von einem Referenzort entlang einer zu messenden Entfernung, wobei das Verfahren des weiteren umfaßt Erfassen der Ausgaberate der Schnur bei Intervallen während der Bewegung der Behandlungsvorrichtung, um somit die Bewegungsgeschwindigkeit der Behandlungsvorrichtung zu bestimmen, und Verwenden der Geschwindigkeitsinformation zum Steuern der Behandlungsvorrichtung.

2. Verfahren nach Anspruch 1,
**dadurch gekennzeichnet,** daß die Behandlung Spritzen bzw. Sprühen umfaßt.

3. Verfahren nach Anspruch 1 oder Anspruch 2, **gekennzeichnet durch** den Schritt der Verwendung von Sensoren (36, 38) zum Erfassen der Ausgaberate der Schnur (24).

4. Verfahren nach einem der Ansprüche 1 bis 3, **gekennzeichnet durch** den Schritt der Verwendung der Geschwindigkeitsinformation zum Steuern der Behandlungsvorrichtung, umfassend Bereitstellen eines Signales, welches über Leiter (48) weitergeleitet wird zu einem Steuersystem für die Behandlungsvorrichtung.

5. Verfahren nach einem der vorangegangenen Ansprüche, **gekennzeichnet durch** den Schritt der Erfassung der Ausgaberate der Schnur, umfassend die Erfassung beabstandeter Indikatoren an der Schnur.

6. Verfahren nach einem der vorangegangenen Ansprüche,
**gekennzeichnet durch** den Schritt des Ausgebens der wegwerfbaren Meßschnur (24), umfassend Ausgeben der Schnur aus einer Kassette (32), welche die Schnur enthält.

7. Verfahren nach einem der vorangegangenen Ansprüche,
**gekennzeichnet durch** den Schritt des Ausgebens der wegwerfbaren Meßschnur (24) von einem Referenzort, umfassend Befestigen eines Endes der Schnur mittels eines nach unten gerichteten Projektils.

8. Verfahren nach einem der vorangegangenen Ansprüche,
**gekennzeichnet durch** den Schritt der Betätigung einer Schnurschneideinrichtung zum Wegwerfen der Schnur (24) nach Durchführen des Schrittes der Erfassung der Ausgaberate.

9. Vorrichtung zur Behandlung von Boden oder Getreide oder Behandlungsvorrichtung, anderwärtig abhängig von der zurückgelegten Entfernung durch die Vorrichtung, wobei die Vorrichtung umfaßt eine Entfernungsmeßvorrichtung (22) und eine Steuereinrichtung (42) für die Behandlungsvorrichtung, wodurch die während der Bewegung der Vorrichtung (22) erhaltene Entfernungsinformation effektiv ist in der Verwendung zum Steuern der Behandlungsvorrichtung,
**dadurch gekennzeichnet**, daß die Entfernungsmeßvorrichtung eine Vorrichtung enthält, angepaßt zum Ausgeben einer wegwerfbaren Meßschnur (24), ausgebbar von einem Referenzort entlang einer zu messenden Entfernung, und daß die Entfernungsmeßvorrichtung ausgelegt ist zum Erfassen der Ausgaberate der Schnur bei Intervallen während der Bewegung der Behandlungsvorrichtung, um somit die Bewegungsgeschwindigkeit der Behandlungsvorrichtung zu bestimmen, wodurch die Steuereinrichtung verwendet werden kann zum Steuern der Behandlungsvorrichtung.

10. Vorrichtung nach Anspruch 9, in der Form einer Sprüh- bzw. Spritzeinrichtung.

11. Vorrichtung nach Anspruch 9 oder Anspruch 10,
**dadurch gekennzeichnet**, daß die Entfernungsmeßvorrichtung Sensoren (36, 38) umfaßt, zum Erfassen der Ausgaberate der Schnur (24).

12. Vorrichtung nach einem der Ansprüche 9 bis 11,
**dadurch gekennzeichnet**, daß die Entfernungsmeßvorrichtung ausgelegt ist, um ein Signal bereitzustellen, wobei das Signal verarbeitet bzw. weitergeleitet wird über Leiter (48), während der Verwendung, zu der Steuereinrichtung (42) für die Behandlungsvorrichtung.

13. Vorrichtung nach einem der Ansprüche 9 bis 12,
**dadurch gekennzeichnet**, daß die Schnur (24) beabstandete Indikatoren umfaßt, ausgelegt, um durch die Entfernungsmeßvorrichtung (22) erfaßt zu werden.

14. Vorrichtung nach einem der Ansprüche 9 bis 13,
**dadurch gekennzeichnet**, daß die wegwerfbare Meßschnur (24) bereitgestellt ist in einer Kassette (32), von welcher sie ausgegeben wird.

15. Vorrichtung nach einem der Ansprüche 9 bis 13,
**dadurch gekennzeichnet**, daß ein spitzes Projektil vorgesehen ist, welches an der Schnur (24) zu befestigen ist, zum Nachuntenvorspringen, um das freie Ende der Schnur zu befestigen, um derselben zu ermöglichen, davon ausgegeben zu werden.

16. Vorrichtung nach einem der Ansprüche 9 bis 14,
**dadurch gekennzeichnet**, daß eine Schneideinrichtung vorgesehen ist, ausgelegt, um die Schnur (24) zu schneiden, nachdem die Entfernungsmeßvorrichtung die Ausgaberate der Schnur erfaßt hat, wodurch die Schnur weggeworfen bzw. entsorgt wird.

## Revendications

1. Procédé de traitement du sol ou de récoltes ou procédé dépendant d'une autre manière de la distance parcourue par un dispositif de traitement (14), le procédé comprenant la mesure de la distance parcourue par ledit appareil de traitement (14) et l'utilisation de ladite information de distance pour commander ledit dispositif de traitement, caractérisé par
la mesure de ladite distance parcourue en déroulant une ligne de mesure jetable (24) à partir d'un emplacement de référence suivant une distance à mesurer, le procédé comprenant en outre la détection de la vitesse de déroulage de ladite ligne par intervalles pendant le déplacement dudit dispositif de traitement de manière à déterminer la vitesse de déplacement dudit dispositif de traitement, et l'utilisation de ladite information de vitesse pour commander ledit dispositif de traitement.

2. Procédé selon la revendication 1, caractérisé par le fait que ledit traitement comprend la pulvérisation.

3. Procédé selon la revendication 1 ou la revendication 2, caractérisé par l'étape d'utilisation de capteurs (36, 38) afin de détecter ladite vitesse de déroulage de ladite ligne (24).

4. Procédé selon l'une quelconque des revendications 1 à 3, caractérisé par le fait que ladite étape d'utilisation de ladite information de vitesse pour commander ledit dispositif de traitement comprend la fourniture d'un signal, qui est transféré par l'intermédiaire de conducteurs (48), vers un système de commande dudit dispositif de traitement.

5. Procédé selon l'une quelconque des revendications précédentes, caractérisé par le fait que ladite étape de détection de ladite vitesse de déroulage de ladite ligne comprend la détection d'indicateurs répartis sur ladite ligne.

6. Procédé selon l'une quelconque des revendications précédentes, caractérisé par le fait que ladite étape de déroulage de ladite ligne de mesure jetable (24) comprend le déroulage de ladite ligne à partir d'une cassette (32) contenant ladite ligne.

7. Procédé selon l'une quelconque des revendications précédentes, caractérisé par le fait que ladite étape de déroulage de ladite ligne de mesure jetable (24) à partir d'un emplacement de référence comprend la fixation d'une extrémité de ladite ligne au moyen d'un projectile orienté vers le bas.

8. Procédé selon l'une quelconque des revendications précédentes, caractérisé par l'étape d'activation d'un moyen formant coupe fil afin de jeter ladite ligne (24) après avoir effectué l'étape de détection de ladite vitesse de déroulage.

9. Dispositif de traitement du sol ou de récoltes ou appareil de traitement dépendant d'une autre manière de la distance parcourue par ledit dispositif, le dispositif comprenant un dispositif de mesure de distance (22) et un moyen de commande (42) pour ledit dispositif de traitement, ce par quoi, ladite information de distance obtenue pendant le déplacement dudit dispositif (22) permet, en utilisation, de commander ledit dispositif de traitement, caractérisé en ce que
ledit dispositif de mesure de distance comprend un dispositif adapté pour dérouler une ligne de mesure jetable (24) pouvant être déroulée à partir d'un emplacement de référence sur une distance à mesurer, et en ce que ledit dispositif de mesure de distance est adapté pour détecter la vitesse de déroulage de ladite ligne par intervalles pendant le déplacement dudit dispositif de traitement de manière à déterminer la vitesse de déplacement dudit dispositif de traitement, ce par quoi ledit moyen de commande peut être utilisé pour commander ledit dispositif de traitement.

10. Dispositif selon la revendication 3, sous la forme d'un pulvérisateur.

11. Dispositif selon la revendication 9 ou la revendication 10, caractérisé en ce que ledit dispositif de mesure de distance comprend des capteurs (36, 38) destinés à détecter ladite vitesse de déroulage de ladite ligne (24).

12. Dispositif selon l'une quelconque des revendications 9 à 11, caractérisé en ce que ledit dispositif de mesure de distance est adapté pour produire un signal transféré par l'intermédiaire de conducteurs (48), et ledit signal, en utilisation, est délivré audit moyen de commande (42) dudit dispositif de traitement.

13. Dispositif selon l'une quelconque des revendications 9 à 12, caractérisé en ce que ladite ligne (24) comprend des indicateurs répartis adaptés de manière à être détectés par ledit dispositif de mesure de distance (22).

14. Dispositif selon l'une quelconque des revendications 9 à 13, caractérisé en ce que la ligne de mesure jetable (24) est disposée dans une cassette (32) à partir de laquelle elle est délivrée.

15. Dispositif selon l'une quelconque des revendications 9 à 13, caractérisé par un projectile effilé destiné à être fixé sur ladite ligne (24) pour être projeté vers le bas afin de fixer l'extrémité libre de ladite ligne pour permettre son déroulage à partir là.

16. Dispositif selon l'une quelconque des revendications 9 à 14, caractérisé par un moyen coupant adapté pour couper ladite ligne (24) après que ledit dispositif de mesure de distance a détecté ladite vitesse de déroulage de ladite ligne, ce par quoi, la ligne peut être jetée.
